# EUROPEAN PATENT SPECIFICATION

(11) **EP 2 433 862 B1**
(45) Date of publication and mention of the grant of the patent: **29.06.2016**
(21) Application number: 10724105.1
(22) Date of filing: 21.05.2010
(51) Int. Cl.: B64C 3/34

(54) **METHOD FOR SEALING TORSION BOXES OF AIRCRAFT**
METHODE ZUR ABDICHTUNG VON FLUGZEUG-TORSIONSSTRUKTUREN
PROCEDE D'ETANCHEIFICATION DE CAISSONS DE TORSION D'AVION

(30) Priority: 22.05.2009 ES 200901269
(43) Date of publication of application: 28.03.2012
(73) Proprietor: Airbus Operations, S.L., 28906 Getafe Madrid (ES)
(72) Inventor: BALSA GONZÁLEZ, Alberto, E-28341 Valdemoro Madrid (ES); BURGOS GALLEGO, Francisco de Paula, E-28320 Pinto Madrid (ES)
(74) Representative: Elzaburu Marquez, Alberto
(86) International application number: PCT/ES2010/070342
(87) International publication number: WO 2010/133746

(56) References cited:
- US-A- 3 420 477
- US-A- 3 587 914
- US-A- 6 073 889

## Description

### Field of the Invention

The present invention relates to a method for sealing the joint of torsion boxes of aircraft structures, particularly of structures carrying fuel therein, such that fuel leaks during the operative life of the aircraft are prevented.

### Background of the Invention

A torsion box consists of two skins which are applied to a central or inner material (core), generally a mesh or a grid of the same type. The torsion box functions similarly to a beam, although it is considerably lighter than a solid beam of the same size, without losing much strength. Torsion boxes are used in building fuselages or aircraft structures, particularly in wings and in vertical and horizontal stabilizers.

Joining the torsion boxes of those elements of the aircraft carrying fuel therein has a number of problems with respect to leaks. Leaks usually occur when joining torsion boxes both in the rear part of the joint and in the front part thereof. These leaks occur due to the geometry itself of the parts forming the mentioned boxes, since these parts generate cavities or gaps when they are joined, these cavities serving as a path for the fuel housed inside said boxes.

There are several defined problematic areas and these leak problems are solved today with a methodology prone to improvement. Today, this type of leak is handled in several ways; one of them consists of flooding the area in which there are cavities or gaps of a material acting as a sealant. Another one of the known solutions consists of using a part with a special design which covers most of the possible surface in which the cavities or gaps exist, such that the amount of sealant material which is necessary to apply is slightly reduced. In both cases, the leak is dealt with at the end of its path and with rather ineffective methods, since the application of a large amount of sealant material causes it to crack over time, which causes the occurrence of new leak paths for the fuel.

In addition to the sealant cracking, as can be seen in the previous example, the parts with a special design are secured to the structure of the torsion box only by means of the grip of the sealant material itself. Due to the operative life itself of the aircraft, which is subjected to loads and vibrations, this solution generates a number of problems during the maintenance of the aircraft, it even being necessary to remove all the sealant material applied and again installing new parts again embedded in a large amount of sealant material in the event that the original material is cracked and the sealing part is loose. This solution therefore presents a number of problems with respect to costs and times.

Sealing devices are known, such as the one described in document US6073889 for example, which improve the aerodynamics of the aircraft, preventing jumps in the external airflow in contact with the surface of the airplane (increasing the aerodynamic efficiency of the airplane). However, devices intended for sealing fuel leaks of an aircraft are not known.

Document US 3420477 A discloses an integral fuel tank for aircraft comprising a tank of desired configuration and capacity constructed in the wing of the said aircraft utilizing the supporting structure thereof. The inboard, outboard and rear closure members are secured to the said supporting structure and sealed inside the wing. At least one sheet of flexible material is laminated to the outer surface of the skin of the wing panel and extends outwardly of the limits of the fuel tank thus formed, sealing the fuel tank and also improving the aerodynamic performance of the wing.

Document US 3587914 A relates to vehicle fuel cells and self sealing units for said fuel cells. The fuel cells are defined by vehicle frame structure members, a surface bordering the fuel cell of one at least of said members having a self-sealing unit extending across and being bonded thereto.

The present invention offers a solution to the previously mentioned problems.

### Summary of the Invention

Thus, the invention develops a method for sealing the joint of torsion boxes of aircraft structures, said structures carrying fuel therein, the torsion boxes consisting of two skins which are applied to a core with central or inner material which consists of a mesh or a grid of the same type, such method comprising securing a device with three sides that meet at a corner to the inner part of the structural parts of the joint of the torsion boxes of the aircraft, said device thus closing the gaps existing in the joint of the boxes and preventing possible fuel leaks, the device being a non-structural component of the mentioned joint. One of the essential features of the device of the method of the invention for sealing the joint of torsion boxes is the fact that it is a non-structural component of the mentioned joint, which allows assuring perfect sealing of said joint. The device of the method of the invention is non-structural because it does not withstand the loads existing in the mentioned structure. One way to make the device not withstand stresses is by making the borehole in which the rivet for securing the mentioned device to the other parts is arranged slightly larger than the diameter of said rivet. The structural parts of the joint of torsion boxes of structures of the aircraft must withstand high loads or forces to which these structures are subjected, so they require a perfect support between the sides forming them with the adjacent parts. Achieving this perfect support with parts having three sides is very complex. Since the device of the method of the invention is not structural, the support of the mentioned device does not have to be perfect, there being able to be small spaces between its three sides and the adjacent parts, it only being necessary to cover these minimum spaces with sealant material to assure a perfect sealing during the entire useful service life of the aircraft.

Other features and advantages of the present invention will be understood from the following detailed description of its object in relation to the attached drawings.

### Description of the Drawings

Figure 1 shows a schematic view of the joint of torsion boxes by means of the use of a sealing part according to the known prior art.
Figure 2 shows a detail of Figure 1, which shows the areas which will be flooded with sealant material according to the known prior art.
Figure 3 shows a schematic view of the inside of the joint of torsion boxes of an aircraft in which the device of the method of the invention will be installed.
Figure 4 shows a detail of the cavity or gap generated in the joint of torsion boxes, which will be a possible path for the fuel leak.
Figure 5 shows a detail of the device for sealing the joint of torsion boxes of the method of the present invention placed in said joint and seen from the inside thereof.
Figure 6 shows a detail of the device of the method of the invention for sealing the joint of torsion boxes.

### Detailed Description of the Invention

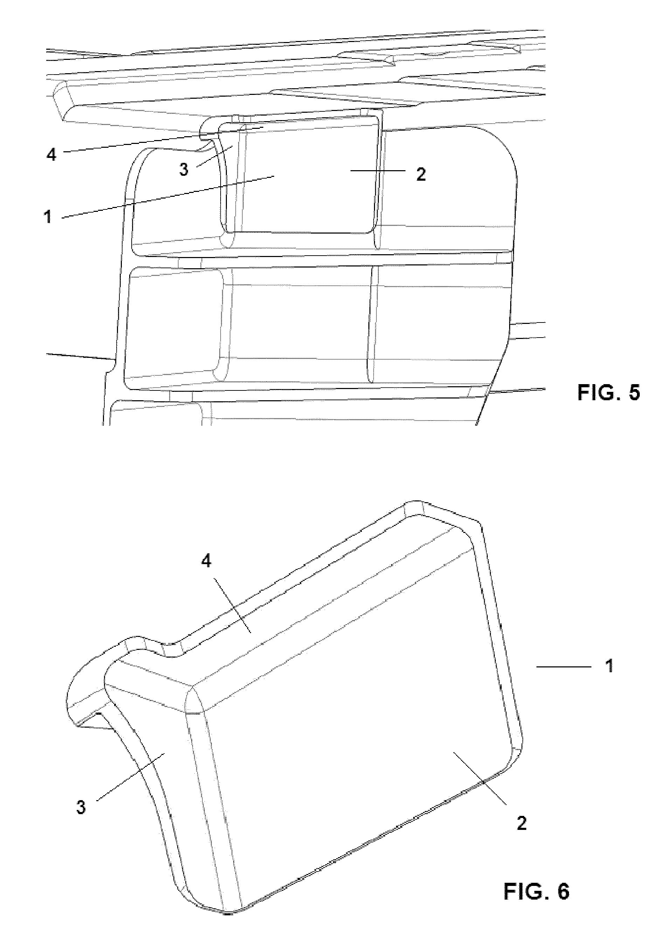

The present invention develops a method for sealing the joint of torsion boxes 5, 6 of aircraft structures, said structures carrying fuel therein, such method comprising securing a device 1 with three sides 2, 3, 4 that meet at a corner to the inner part of the structural parts of the joint of the torsion boxes 5, 6 of the aircraft, said device 1 thus closing the gaps 7 existing in the joint of the boxes 5, 6 and preventing possible fuel leaks, the device 1 being a non-structural component of the mentioned joint. As shown in detail in Figure 6, the closure formed by the three sides, 2, 3 and 4 of the device 1 prevents possible fuel leaks once it is arranged in the joint of the torsion boxes 5 and 6.

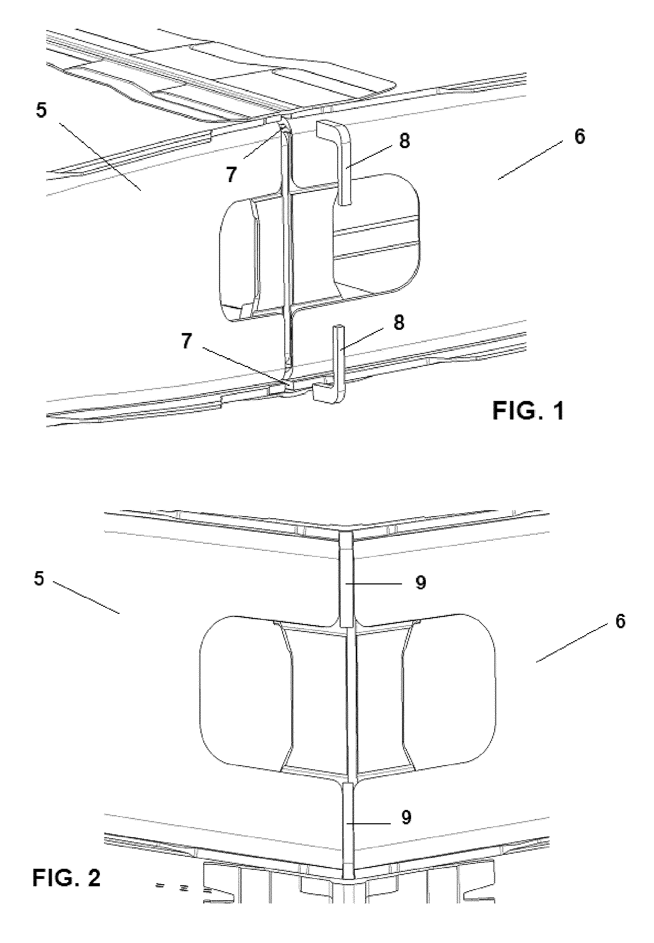

The concept used until now in joining torsion boxes of aircraft is shown in Figures 1 and 2. Figure 1 shows the torsion boxes 5 and 6 which must be joined together, said joint being carried out on the outer part of the joint of torsion boxes such that the cavities or gaps 7 which must be covered once the boxes 5 and 6 are joined are covered by means of sealing parts 8 especially designed for such effect. Once the sealing parts 8 are placed in the joint of the boxes 5 and 6 (Figure 2), it is necessary to flood the areas 9 with sealant material so that the joint does not have leaks. The enormous amount of sealant used to flood the areas 9 causes the sealant to crack over time, as mentioned above, which generates the occurrence of new leak paths for the fuel. In addition to the sealant cracking, the parts 8 with a special design are secured to the structure of the torsion box only by means of the grip of the sealant material itself, generating maintenance problems therein due to the operative life itself of the aircraft, which is subjected to loads and vibrations.

The new concept of the device 1 of the method of the invention consists of attacking the fuel leak from its start, i.e., from inside the torsion box, 5 or 6, making a device 1 designed with three sides, 2, 3 and 4 that meet at a corner, said device 1 being installed in the process of assembling the torsion boxes 5 and 6. Said device 1 is fixed to the joint of the boxes 5 and 6 such that it is completely impossible for it to become detached therefrom, thus preventing future problems in the service life of the aircraft.

The mentioned device 1 is installed inside the joint of torsion boxes 5 and 6, unlike the known sealing parts 8, which are installed from the outside of the mentioned boxes, 5 and 6. Furthermore, as a result of the three-sided geometry of the device 1, perfect sealing of the existing cavities or gaps 7 is assured.

The device 1 of the invention is permanently joined to the torsion boxes 5 and 6 preferably by means of the use of rivets. The device 1 is thus joined for life to the structure, improving the sealing concept in the structure itself, since it is joined from inside the torsion boxes 5 and 6, and uses a minimum amount of sealant material, which is a considerable savings in curing time and material of the structure comprising the mentioned torsion boxes 5 and 6. In addition, as a result of the three-dimensional geometry itself of the device 1, said device is able to cover the gaps or cavities 7 existing in the previous structures (Figure 1) more effectively with respect to the known prior art. Furthermore, it is necessary in known solutions to drain the fuel from the inside of the structures and to subsequently ventilate them in order to perform the necessary maintenance tasks when the sealant material has deteriorated, which is not necessary with the permanent device 1 of the method of the invention. The main advantages of the device 1 of the method of the invention are to thus achieve a better sealing, which is permanent and does not require maintenance.

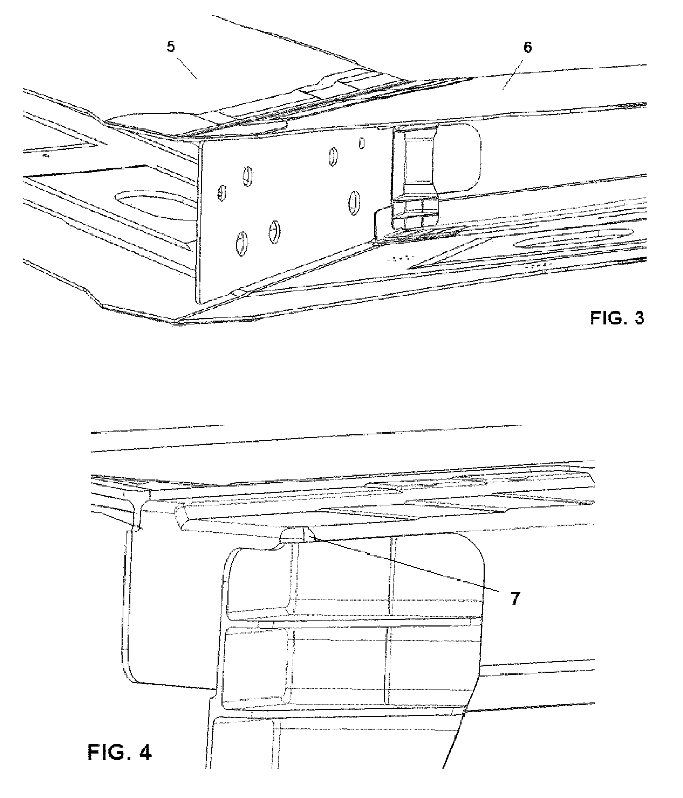

Figures 3, 4 and 5 show a device 1 of the method of the invention which is applied to the gaps or cavities 7 existing in the rear part of a joint of torsion boxes 5 and 6.

The device 1 of the method of the invention is a non-structural device because it does not withstand the loads existing in the joint of the torsion boxes 5, 6 of the structure of the aircraft. The device 1 is thus joined in a permanent manner to the torsion boxes 5 and 6 preferably by means of the use of rivets, such that in order for the device 1 to not withstand stresses, the boreholes in which the rivets for securing the device 1 to the torsion boxes 5, 6 are arranged are somewhat larger than the diameters of the mentioned rivets.

Those modifications comprised within the scope defined by the following claims can be introduced in the preferred embodiment described above.

## Claims

1. Method for sealing the joint of torsion boxes (5, 6) of aircraft structures, said structures carrying fuel therein, the torsion boxes (5, 6) consisting of two skins which are applied to a core with central or inner material which consists of a mesh or a grid of the same type, **characterized in that** it comprises securing a device (1) with three sides (2, 3, 4) that meet at a corner to the inner part of the structural parts of the joint of the torsion boxes (5, 6) of the aircraft, said device (1) thus closing the gaps (7) existing in the joint of the boxes (5, 6) and preventing possible fuel leaks, the device (1) being a non-structural component of the mentioned joint.

2. Method for sealing the joint of torsion boxes (5, 6) of aircraft structures according to claim 1, **characterized in that** the device (1) is placed in the joint of the torsion boxes (5, 6) during the step of assembling the mentioned boxes (5, 6) when the structures of the aircraft are formed.

3. Method for sealing the joint of torsion boxes (5, 6) of aircraft structures according to any of the previous claims, **characterized in that** sealant material is applied to cover small spaces between the joint of the sides (2, 3, 4) of the device (1) with the inside of the torsion boxes (5, 6), in order to thus assure sealing of said device (1).

4. Method for sealing the joint of torsion boxes (5, 6) of aircraft structures according to any of the previous claims, **characterized in that** the device (1) is joined to the torsion boxes (5, 6) by means of rivets.

5. Method for sealing the joint of torsion boxes (5, 6) of aircraft structures according to claim 4, **characterized in that** the boreholes in which the rivets for securing the device (1) to the torsion boxes (5, 6) are arranged are larger than the diameters of the mentioned rivets, so that the device (1) does not withstand stresses.

## Patentansprüche

1. Verfahren zum Abdichten der Verbindungsstelle von Torsionsboxen (5, 6) von Flugzeugstrukturen, wobei in den Strukturen Kraftstoff transportiert wird, wobei die Torsionsboxen (5, 6) aus zwei Häuten bestehen, die auf einem Kern aus einem mittigen oder inneren Material aufgebracht sind, das aus einem maschen- oder gitterförmigen Material des gleichen Typs besteht;
**dadurch gekennzeichnet, dass** das Verfahren den Schritt aufweist:
Befestigen einer Vorrichtung (1) mit drei Seiten (2, 3, 4), die an einer Ecke aufeinandertreffen, an einem Innenteil der Strukturteile der Verbindungsstelle der Torsionsboxen (5, 6) des Flugzeugs, wodurch die Vorrichtung (1) die an der Verbindungsstelle der Torsionsboxen (5, 6) vorhandenen Fugen (7) verschließt und mögliche Kraftstoffverluste verhindert, wobei die Vorrichtung (1) kein Strukturteil der Verbindungsstelle ist.

2. Verfahren zum Abdichten der Verbindungsstelle von Torsionsboxen (5, 6) von Flugzeugstrukturen, nach Anspruch 1, **dadurch gekennzeichnet, dass** die Vorrichtung (1) während des Schritts zum Montieren der Torsionsboxen (5, 6), wenn die Strukturen des Flugzeugs ausgebildet werden, in der Verbindungsstelle der Torsionsboxen (5, 6) angeordnet wird.

3. Verfahren zum Abdichten der Verbindungsstelle von Torsionsboxen (5, 6) von Flugzeugstrukturen, nach einem der vorherigen Ansprüche, **dadurch gekennzeichnet, dass** das Dichtungsmaterial derart aufgebracht wird, dass es kleine Zwischenräume an der Verbindung zwischen den Seiten (2, 3, 4) der Vorrichtung (1) und der Innenseite der Torsionsboxen (5, 6) abdeckt, um dadurch eine Abdichtung der Vorrichtung (1) zu gewährleisten.

4. Verfahren zum Abdichten der Verbindungsstelle von Torsionsboxen (5, 6) von Flugzeugstrukturen, nach einem der vorangehenden Ansprüche, **dadurch gekennzeichnet, dass** die Vorrichtung (1) durch Nieten mit den Torsionsboxen (5, 6) verbunden wird.

5. Verfahren zum Abdichten der Verbindungsstelle von Torsionsboxen (5, 6) von Flugzeugstrukturen, nach Anspruch 4, **dadurch gekennzeichnet, dass** die Bohrlöcher, in die die Nieten zum Befestigen der Vorrichtung (1) an den Torsionsboxen (5, 6) angeordnet werden, größer sind als die Durchmesser der Nieten, so dass die Vorrichtung Belastungen nicht widersteht.

## Revendications

1. Procédé d'étanchéisation du joint de caissons de torsion (5, 6) de structures d'avions, lesdites structures contenant du carburant, les caissons de torsion (5, 6) étant composés de deux revêtements qui sont appliqués sur une partie centrale avec un matériau central ou intérieur qui se compose d'un maillage ou d'un quadrillage du même type, **caractérisé en ce qu'**il comprend la fixation d'un dispositif (1) à trois côtés (2, 3, 4) qui se rencontrent à un angle sur la partie intérieure des pièces structurelles du joint des caissons de torsion (5, 6) de l'avion, ledit dispositif (1) fermant ainsi les espaces (7) qui existent dans le joint des caissons (5, 6) et empêchant toute fuite de carburant possible, le dispositif (1) étant un composant non structurel du joint mentionné.

2. Procédé d'étanchéisation du joint de caissons de torsion (5, 6) de structures d'avions selon la revendication 1, **caractérisé en ce que** le dispositif (1) est placé dans le joint des caissons de torsion (5, 6) pendant l'étape d'assemblage des caissons mentionnés (5, 6) lorsque les structures de l'avion sont formées.

3. Procédé d'étanchéisation du joint de caissons de torsion (5, 6) de structures d'avions selon l'une quelconque des revendications précédentes, **caractérisé en ce que** le matériau d'étanchéité est appliqué afin de recouvrir de petits espaces entre le joint des côtés (2, 3, 4) du dispositif (1) avec l'intérieur des caissons de torsion (5, 6), afin de garantir l'étanchéité dudit dispositif (1).

4. Procédé d'étanchéisation du joint de caissons de torsion (5, 6) de structures d'avions selon l'une quelconque des revendications précédentes, **caractérisé en ce que** le dispositif (1) est joint aux caissons de torsion (5, 6) à l'aide de rivets.

5. Procédé d'étanchéisation du joint de caissons de torsion (5, 6) de structures d'avions selon la revendication 4, **caractérisé en ce que** les trous dans lesquels les rivets destinés à fixer le dispositif (1) sur les caissons de torsion (5, 6) sont placés sont plus grands que les diamètres des rivets mentionnés, de sorte que le dispositif (1) ne résiste pas aux contraintes.
